# EUROPÄISCHE PATENTSCHRIFT

(11) **EP 2 232 404 B1**
(45) Veröffentlichungstag und Bekanntmachung des Hinweises auf die Patenterteilung: **18.05.2016**
(21) Anmeldenummer: 08736381.8
(22) Anmeldetag: 18.04.2008
(51) Int. Cl.: G06K 9/00

(54) **BILDERFASSUNGSVORRICHTUNG SOWIE SYSTEM ZUR ZUTRITTS- UND/ODER ZUGANGSKONTROLLE**
IMAGE ACQUISITION DEVICE AND SYSTEM FOR ENTRY AND/OR ACCESS CONTROL
APPAREIL DE SAISIE D'IMAGES ET SYSTÈME POUR LE CONTRÔLE D'ENTRÉE ET/OU D'ACCÈS

(30) Priorität: 17.01.2008 DE 202008000675 U
(43) Veröffentlichungstag der Anmeldung: 29.09.2010
(73) Patentinhaber: PCS Systemtechnik Gmbh, 81539 München (DE)
(72) Erfinder: RACKOWITZ, Wolfgang, 83607 Holzkirchen (DE)
(74) Vertreter: Müller & Schubert
(86) Internationale Anmeldenummer: PCT/EP2008/054736
(87) Internationale Veröffentlichungsnummer: WO 2009/089923

(56) Entgegenhaltungen:
- EP-A- 1 387 309
- JP-A- 2003 008 954
- US-A1- 2003 171 653
- US-B1- 6 603 867
- "Fujitsu develops biometric mouse with palm vein pattern recognition technology"[Online] 28. August 2002 (2002-08-28), XP002510155 Gefunden im Internet: URL:http://pr.fujitsu.com/en/news/2002/08/ 28.html> [gefunden am 2009-01-12]
- "A different kind of palm reader at school"[Online] 27. Oktober 2006 (2006-10-27), XP002510156 Gefunden im Internet: URL:http://news.cnet.com/8301-17938_105-95 19-1.html> [gefunden am 2009-01-14]
- RATHA, NALINI K.; GOVINDARAJU, VENU (EDS.): ADVANCES IN BIOMETRICS - SENSORS, ALGORITHMS AND SYSTEMS, 2008, XP002510335 ISBN: 978-1-84628-920-0

## Beschreibung

Die vorliegende Erfindung betrifft ein System zur Zutritts- und/oder Zugangskontrolle.

Derartige Systeme dienen grundsätzlich dazu, entsprechend autorisierten Personen möglichst automatisiert einen Zugang oder Zutritt zu gewähren und dazu die Berechtigung mittels eines Authentifizierungsverfahrens zu prüfen. Unter Zutritt kann dabei beispielsweise verstanden werden, dass eine Person ein Gebäude oder einen bestimmten Gebäudeteil betreten kann. In diesem Fall wird unter Zutritt der Eintritt einer Person verstanden. Unter Zugang wird gemäß der vorliegenden Erfindung verstanden, dass eine Person auf ein elektronisches Gerät, beispielsweise einen Computer oder dergleichen zugreifen darf. In diesem Fall wird unter Zugang der Person der Zugriff auf das elektronische Gerät verstanden.

Systeme zur Zutritts- und/oder Zugangskontrolle sowie zur Prüfung einer Zutritts- und/oder Zugangsberechtigung sind im Stand der Technik auf vielfältigste Weise bekannt. Beispielsweise ist es bekannt, eine Kontrolle mittels Erfassung biometrischer Daten der den Zutritt/Zugang begehrenden Person durchzuführen. Hierbei können beispielsweise Fingerabdrücke erfasst und untersucht werden, eine Gesichtsfeldprüfung durchgeführt werden, ein Scan der Augeniris durchgeführt werden, oder dergleichen.

Bekannte Systeme zur Zutritts- und/oder Zugangskontrolle auf diesem Gebiet verfügen in der Regel zunächst über eine Sensoreinrichtung zur Erfassung der biometrischen Daten. Weiterhin ist eine Speichereinrichtung vorgesehen, in der entsprechende Referenzwerte zu den biometrischen Daten abgespeichert sind. In einer Komparatoreinrichtung werden die erfassten biometrischen Werte mit den Referenzwerten verglichen. Je nach Vergleichsergebnis wird dann der Zutritt/Zugang gewährt oder verweigert.

Eine andere Möglichkeit der Erfassung biometrischer Werte besteht in der Bilderfassung eines Venenmusters der Handfläche einer den Zutritt/Zugang begehrenden Person. Bei dieser Lösung, die auch als Handvenenmusterauthentifizierung bezeichnet wird, wird mittels einer Bilderfassungsvorrichtung ein Muster der Venen in der Handfläche erfasst und zu Authentifizierungszwecken herangezogen. Eine derartige Lösung ist beispielsweise in der DE 60 2005 001 089 T2 beschrieben.

Die dort offenbarte Lösung verfügt zunächst über eine Sensoreinrichtung, die eine Einrichtung zum Emittieren von Strahlen, beispielsweise von Infrarotstrahlen aufweist. Die Strahlen werden in Richtung der zu authentifizierenden Hand emittiert und von dort reflektiert. Die reflektierten Strahlen werden von einer Einrichtung zum Erfassen der reflektierten Strahlung, die Bestandteil der Sensoreinrichtung ist, erfasst. Anhand der reflektierten Daten wird ein Muster der Handflächenvenen erzeugt, das anschließend mit Referenzmustern verglichen werden kann.

Wichtig bei dieser Vorgehensweise ist, dass sich die zu prüfende Handfläche in einer bestimmten Position in Bezug auf die Sensoreinrichtung befindet. Zu diesem Zweck weist die bekannte Lösung eine Führungseinrichtung auf, mittels derer die Handfläche in der erforderlichen Weise angestützt wird. Die Führungseinrichtung besteht aus mehreren Flächen, auf denen der Handrücken und die Finger abgelegt werden müssen.

Nachteilig bei dieser bekannten Lösung ist allerdings, dass eine richtige Positionierung der Handfläche in Bezug auf die Sensoreinrichtung nur schwierig möglich ist, da die Führungseinrichtung nur eine punktuelle Auflage der Hand zulässt. Weiterhin ist die Sensoreinrichtung nicht abgedeckt, so dass es zu einer Verschmutzung und/oder Beschädigung der Sensoreinrichtung kommen kann. Wird die Sensoreinrichtung mit einer flachen Glasplatte abgedeckt, kann es zu unerwünschten Reflektionen an der Glasoberfläche kommen, die das Messergebnis negativ beeinträchtigen.

In dem Dokument "Fujitsu develops biometric mouse with palm vein pattern recognition technology, 28. Februar 2002" ist eine Computermaus beschrieben, die zum Zwecke der Authentifizierung eine Einrichtung zum Emittieren von Strahlung in Richtung der Handfläche sowie eine Einrichtung zum Erfassen von reflektierter Strahlung von der Handfläche aufweist. Beide Einrichtungen sind innerhalb der Computermaus angeordnet. Die Computermaus weist auch einen transparenten Bereich auf, durch den emittierte Strahlung hindurchtreten kann. Eine ähnliche Lösung ist auch in der EP 1 387 309 A2 beschrieben.

Die US 6,603,867 B1 beschreibt in anderem Zusammenhang ein System, mittels dessen eine dreidimensionale Objektidentifizierung realisiert werden kann.

Grundsätzlich bekannt sind auch Kameraeinrichtungen mit einem halbkugelförmigen Gehäuse, innerhalb dessen eine Kamera und Licht emittierende Elemente angeordnet sind. Eine solche Kameraeinrichtung ist beispielswiese in der JP 2003/008954 A oder in der US 2003/0171653 A1 beschrieben.

Die Aufgabe der vorliegenden Erfindung besteht darin, eine Bilderfassungsvorrichtung der eingangs genannten Art derart weiterzubilden, dass die im Zusammenhang mit dem Stand der Technik beschriebenen Nachteile vermieden werden können. Weiterhin soll auch ein entsprechend verbessertes System zur Zutritts- und/oder Zugangskontrolle bereitgestellt werden.

Die Aufgabe wird erfindungsgemäß gelöst durch das System zur Zutritts- und/oder Zugangskontrolle mit den Merkmalen gemäß dem unabhängigen Patentanspruch 1. Weitere Merkmale und Details der Erfindung ergeben sich aus den Unteransprüchen, der Beschreibung sowie den Zeichnungen.

Erfindungsgemäß wird ein System zur Zutritts- und/oder Zugangskontrolle mittels Handflächenvenenauthentifizierung bereitgestellt, mit einer Speichereinrichtung, in der Informationsdaten in Form von Referenz-Handflächenvenenmustern abgelegt sind, mit einer Bilderfassungsvorrichtung zum Erfassen eines Musters einer Handfläche zum Zwecke der Handflächenvenenauthentifizierung, mit einer Sensoreinrichtung, aufweisend eine Einrichtung zum Emittieren von Strahlung in Form von Infrarotlicht in Richtung der Handfläche sowie eine Einrichtung zum Erfassen von reflektierter Strahlung von einer Handfläche, und mit einer Führungseinrichtung zum Positionieren der Handfläche in Bezug auf die Sensoreinrichtung, bei dem die Führungseinrichtung als Kuppel in Form einer Halbkugel ausgebildet ist, sodass Strahlung der Einrichtung zum Emittieren von Strahlung in Form von Infrarotlicht, die an der Führungseinrichtung direkt zurück reflektiert wird, so seitlich abgelenkt wird, dass die Einrichtung zum Erfassen von an einer Handfläche reflektierter Strahlung nicht gestört wird, bei dem die Führungseinrichtung einen kreisförmigen Raum überspannt, der einen ebenfalls kreisförmigen Fußbereich aufweist, bei dem die Sensoreinrichtung innerhalb des kreisförmigen Fußbereichs, bevorzugt in dessen Zentrum, angeordnet ist, bei dem die Einrichtung zum Emittieren von Strahlung eine oder mehrere Kleinststrahlungsquellen aufweist, die in der Ebene des kreisförmigen Fußbereichs angeordnet sind, bei dem die Einrichtung zum Erfassen reflektierter Strahlung als Kamera ausgebildet ist, bei dem die Sensoreinrichtung eine Einrichtung zur Bilderfassung eines Musters der Handfläche auf der Basis der von der Handfläche reflektierten Strahlung aufweist, bei dem die Bilderfassungsvorrichtung eine Einrichtung zur Statusanzeige der Authentifizierung aufweist, bei dem die Einrichtung zur Statusanzeige mehrere Kleinstlichtquellen aufweist und die Kleinstlichtquellen im Peripheriebereich der Sensoreinrichtung räumlich auf dem Fußkreis zwischen Sensoreinrichtung und Führungseinrichtung konzentrisch um die Sensoreinrichtung herum angeordnet sind, bei dem die Führungseinrichtung die Sensoreinrichtung überspannt und bei dem die Führungseinrichtung aus einem für die emittierte Strahlung durchlässigen Material ausgebildet ist, und mit einer Komparatoreinrichtung zum Vergleichen eines von der Bilderfassungsvorrichtung erzeugten Handflächenvenenmusters mit den Referenz-Handflächenvenenmustern.

Das erfindungsgemäße System betrifft die Erfassung eines Venenmusters einer Handfläche zum Zwecke der Handflächenvenenauthentifizierung. Hierbei kann es sich beispielsweise um eine wie eingangs bereits geschilderte Handvenenauthentifizierung handeln.

Die Bilderfassungsvorrichtung weist als ein erstes zentrales Merkmal eine bestimmte Sensoreinrichtung auf. Diese Sensoreinrichtung wiederum verfügt über eine Einrichtung zum Emittieren von Strahlung in Richtung einer - zu authentifizierenden - Handfläche. Dabei ist die Erfindung nicht auf eine bestimmte Ausgestaltung der Einrichtung beschränkt. Einige hierzu vorteilhafte, jedoch nicht ausschließliche Bespiele werden im weiteren Verlauf der Beschreibung näher erläutert. Zusätzlich weist die Sensoreinrichtung auch eine Einrichtung zum Erfassen von reflektierter Strahlung auf, wobei die Strahlung insbesondere von der zu authentifizierenden Handfläche reflektiert wird. Auch diesbezüglich ist die Erfindung nicht auf bestimmte Ausgestaltungen beschränkt. Die Ausgestaltung der Erfassungseinrichtung ergibt sich vielmehr nach der Art der Strahlung. Auch hierzu werden im weiteren Verlauf der Beschreibung einige vorteilhafte, jedoch nicht ausschließliche Beispiele erläutert.

Schließlich verfügt die Bilderfassungsvorrichtung über eine Führungseinrichtung zum Positionieren der Handfläche in Bezug auf die Sensoreinrichtung. Erfindungsgemäß ist die Führungseinrichtung nunmehr in besonderer Weise ausgestaltet, nämlich dergestalt, dass die Führungseinrichtung kuppelförmig ausgebildet ist, wobei die Kuppel die Sensoreinrichtung überspannt.

Unter einer kuppelförmigen Ausgestaltung ist dabei zu verstehen, dass die Führungseinrichtung eine gewölbte Kontur aufweist. Erfindungsgemäß ist die Führungseinrichtung in dieser Ausgestaltung halbkugelförmig ausgebildet, beziehungsweise weist die Kontur einer Halbkugel auf. Dabei ist vorgesehen, dass die Führungseinrichtung einen kreisförmigen Raum überspannt, der dann einen ebenfalls kreisförmigen Fußbereich, einen so genannten Fußkreis, aufweist.

Die Sensoreinrichtung, beziehungsweise zumindest einzelne Bestandteile der Sensoreinrichtung, ist/sind innerhalb des Fußkreises angeordnet, besonders bevorzugt im Zentrum des Fußkreises. Alternativ oder zusätzlich kann vorgesehen sein, dass sich die Sensoreinrichtung, beziehungsweise zumindest einzelne Bestandteile der Sensoreinrichtung, auf der Höhe beziehungsweise in der Ebene des Fußkreises befinden kann/können.

Eine derart ausgestaltete Bilderfassungseinrichtung weist gegenüber der aus dem Stand der Technik bekannten Lösung eine Reihe von Vorteilen auf.

Die aus dem Stand der Technik bekannte Lösung zur Handvenenmustererkennung sendet Strahlung in Form von Infrarotlicht gegen die Hand und misst die von der Hand reflektierte Strahlung. Wird die Sensoreinrichtung mit einer flachen Glasplatte abgedeckt, um Verschmutzungen und Beschädigungen zu vermeiden, wird Licht an der Glasplatte reflektiert und stört somit erheblich die Funktion. Darum bewegt sich bei dieser bekannten Lösung der zulässige Abstand zwischen Glas und Sensor im Bereich von nur wenigen Millimetern. Besser ist es bei der bekannten Lösung allerdings, den Sensor ganz ohne Abdeckung direkt in ein Gerät einzubauen.

Gemäß der vorliegenden Erfindung wird die Sensoreinrichtung unter eine gekrümmte Kuppel gesetzt. Überraschenderweise wurde herausgefunden, dass Strahlung der Sensoreinrichtung, die an der kuppelförmigen Führungseinrichtung direkt zurückreflektiert wird, nicht direkt auf die Sensoreinrichtung zurückreflektiert wird, sondern seitlich abgelenkt wird. Damit lässt sich beispielsweise der Abstand zwischen Führungseinrichtung und Sensoreinrichtung erheblich, das heißt bis auf mehrere Zentimeter, vergrößern.

Durch die erfindungsgemäße Ausgestaltung der Bilderfassungsvorrichtung werden verschiedene Probleme gelöst.

Zunächst ist die Sensoreinrichtung mit ihren empfindlichen Elementen geschützt, insbesondere gegen Verunreinigungen, Beschädigungen oder unerwünschte Dejustierung.

Der empfohlene Abstand zwischen Sensoreinrichtung und Handfläche (vorteilhaft 5-6cm), den die Benutzer einhalten müssen, kann mit Hilfe der kuppelförmigen Führungseinrichtung leicht kontrolliert werden.

Dabei kann unter Positionierung der Handfläche auf der Führungseinrichtung verstanden werden, dass der Benutzer die Handfläche auf der Führungseinrichtung auflegt. In anderer Ausgestaltung ist natürlich auch möglich, dass der Nutzer die Hand in einem gewissen Abstand von der Führungseinrichtung hält. In diesem Fall wird durch die kuppelförmige Führungseinrichtung die Krümmung der zu authentifizierenden Handfläche vorgegeben. Der Benutzer hat somit die Wahl, die Hand auf die Führungseinrichtung aufzulegen oder sie knapp über die Führungseinrichtung zu halten (berührungslos).

Erfindungsgemäß ist die Einrichtung zum Emittieren von Strahlung als Einrichtung zum Emittieren von Infrarotlicht ausgebildet.
Erfindungsgemäß weist die Einrichtung zum Emittieren der Strahlung eine oder mehrere Kleinststrahlungsquellen auf. Diese ist/sind in der Ebene des Fußkreises der kuppelförmigen Führungseinrichtung angeordnet. Beispielsweise kann vorgesehen sein, dass mehrere Kleinststrahlungsquellen vorgesehen sind, die insbesondere kreisförmig angeordnet sein können.

Natürlich ist die Erfindung nicht auf bestimmte Typen von Kleinststrahlungsquellen beschränkt. Vorteilhaft kann es sich bei den Kleinststrahlungsquellen um Kleinstlichtquellen, beispielsweise um Infrarot-LEDs handeln. Hierbei handelt es sich um Licht-Emittierende-Dioden (LED), die Infrarotlicht emittieren.

Erfindungsgemäß ist die Einrichtung zum Erfassen reflektierter Strahlung als Kamera ausgebildet, beispielsweise als Infrarotkamera.

Erfindungsgemäß ist vorgesehen, dass die Sensoreinrichtung eine Einrichtung zur Bilderfassung eines Musters der Handflächenvenen auf der Basis der von der Handfläche reflektierten Strahlung aufweist. In dieser Einrichtung kann dann ein Bild erzeugt werden, das anschließend zu Authentifizierungszwecken mit anderen Referenzbildern verglichen werden kann. Vorteilhaft kann vorgesehen sein, dass die Einrichtung zur Bilderfassung einen körperlichen Bestandteil der Sensoreinrichtung darstellt. Es sind allerdings auch Ausgestaltungen denkbar, in denen die Einrichtung zur Bilderfassung ein konstruktiv separates Bauteil zur Sensoreinrichtung bildet und somit nur einen funktionellen Bestandteil der Sensoreinrichtung darstellt. In einem solchen Fall werden die zur Erfassungseinrichtung reflektierten Strahlen an die Bilderfassungseinrichtung übertragen und dort weiterverarbeitet.

Die Funktionsweise der Bilderfassungseinrichtung wird nachfolgend anhand eines Beispiels exemplarisch verdeutlicht. Die Einrichtung zum Emittieren von Strahlung sendet diese, beispielsweise als Infrarotstrahlung, an die zu authentifizierende Hand. Das die Hand durchströmende Blut absorbiert die Strahlung. Von der Hand zur Sensoreinrichtung zurückreflektierte Strahlung wird von der Einrichtung zum Erfassen der Strahlung, beispielsweise einer Kamera, erfasst und es wird ein Bild erstellt. Auf der Basis dieses Bildes wird in der Bilderfassungseinrichtung ein Template erstellt, beispielsweise mittels geeigneter Programmmittel. Dieses Template kann anschließend in einer Speichereinrichtung eines Systems zur Zutritts- und/oder Zugangskontrolle abgelegt werden.

Erfindungsgemäß ist die Führungseinrichtung aus einem für die emittierte Strahlung durchlässigen Material ausgebildet. Dabei ist die Erfindung natürlich nicht auf bestimmte Materialien beschränkt. Bevorzugt kann jedoch vorgesehen sein, dass die Führungseinrichtung aus transparentem Kunststoff oder Glas ausgebildet ist. Besonders bevorzugt kann vorgesehen sein, dass die Führungseinrichtung im Bereich ihrer Wölbung, oder aber die ganze Führungseinrichtung aus einem solchen Material gebildet ist.

Erfindungsgemäß weist die Bilderfassungsvorrichtung eine Einrichtung zur Statusanzeige der Authentifizierung auf. Mittels einer solchen Einrichtung kann dann nach außen angezeigt werden, wie der Statusverlauf der Authentifizierung ist und ob diese erfolgreich verlaufen ist. Auch bezüglich dieser Einrichtung ist die Erfindung nicht auf bestimmte Ausgestaltungsformen beschränkt.

Erfindungsgemäß ist vorgesehen, dass die Einrichtung zur Statusanzeige eine oder mehrere Kleinstlichtquelle(n), insbesondere wenigstens eine LED (Licht Emittierende Diode), aufweist. Sofern mehrere Kleinstlichtquellen zum Einsatz kommen. können diese beispielsweise kreisförmig angeordnet sein. Vorteilhaft können auch die Kleinstlichtquellen in der Ebene des Fußkreises der kuppelförmigen Führungseinrichtung angeordnet sein.

Die Kleinstlichtquellen können beispielsweise zur Emission von unterschiedlich farbigen Lichtstrahlen ausgebildet sein. Beispielsweise kann vorgesehen sein, dass jede einzelne Kleinstlichtquelle eines bestimmten Typs für sich gesehen zwar immer Lichtstrahlen einer bestimmten Farbe emittiert. In diesem Fall werden dann vorteilhaft unterschiedliche Lichtquellentypen eingesetzt. Die Kleinstlichtquellen können aber auch in einer Weise ausgebildet sein, dass sie mehrere Farben in einem einzigen Bauteil vereinigen. Dies ist insbesondere bei so genannten LEDs möglich, die dann beispielsweise als so genannte RGB-LEDs ausgebildet sein können. Derartige LEDs können dreifarbiges Licht emittieren, Rot (R), Grün (G) und Blau (B). Beispielsweise könnte bei Verwendung verschiedener Farben vorgesehen sein, dass die Einrichtung zur Statusanzeige blau leuchtet, wenn sich diese in einem neutralen Zustand befindet. Bei einer erfolgreichen Authentifizierung könne die Einrichtung beispielsweise grün leuchten, während eine rote Farbe eine negative Authentifizierung und damit einhergehend eine Zugangsverweigerung signalisieren könnte.

Erfindungsgemäß ist die Einrichtung zur Statusanzeige im Peripheriebereich der Sensoreinrichtung angeordnet. In einem solchen Fall kann beispielsweise vorgesehen sein, dass sich die Sensoreinrichtung im Zentrum des Fußkreises der kuppelförmigen Führungseinrichtung befindet. Außerhalb der Sensoreinrichtung, das heißt auf dem Fußkreis räumlich zwischen Sensoreinrichtung und Führungseinrichtung angeordnet, ist die Einrichtung zur Statusanzeige vorgesehen. Wenn diese mehrere Kleinstlichtquellen aufweist, sind diese konzentrisch um die Sensoreinrichtung herum angeordnet.

Vorteilhaft kann zwischen der Einrichtung zur Statusanzeige und der Sensoreinrichtung eine Sichtschutzeinrichtung vorgesehen sein. Dabei ist die Erfindung natürlich nicht auf bestimmte Ausgestaltungsformen der Sichtschutzeinrichtung beschränkt. Die Sichtschutzeinrichtung hat die Aufgabe, dass verhindert wird, dass von der Einrichtung zur Statusanzeige, beispielsweise von deren Kleinstlichtquellen, emittiertes Licht die Sensoreinrichtung, beispielsweise deren Kamera, stören. Beispielsweise könnte die Sichtschutzeinrichtung als Sichtschutzwand ausgebildet sein.

Gemäß der vorliegenden Erfindung kann im Rahmen einer vorteilhaften Ausführungsform eine Sensoreinrichtung vorgesehen sein, die aus Infrarot-LEDs besteht, die nach oben gegen die Hand strahlen, sowie einer eingebauten Kamera, die das Bild der Hand, beispielsweise der Handvenen, wieder aufzeichnet. Das Problem war bisher, dass der Sensor idealerweise ohne Abdeckung in ein Gerät eingebaut werden sollte. Bei Verwendung einer flachen Glasabdeckung muss der Abstand zwischen Sensor und Glas minimal gehalten werden, damit die nach oben strahlenden Infrarot-LEDs nicht die interne Kamera blenden. Die vorliegende Erfindung sieht vor, anstelle eines flachen Glases oder gar keiner Abdeckung eine Glaskuppel zu nehmen, die das Licht seitlich reflektiert und somit nicht mehr die Kamera stört.

Das System zur Zutritts- und/oder Zugangskontrolle arbeitet wie folgt:

Die Einrichtung zum Emittieren von Strahlung der Bilderzeugungsvorrichtung sendet diese, beispielsweise als Infrarotstrahlung, an die zu authentifizierende Hand. Das die Hand durchströmende Blut absorbiert die Strahlung. Von der Hand zur Sensoreinrichtung zurückreflektierte Strahlung wird von der Einrichtung zum Erfassen der Strahlung, beispielsweise einer Kamera, erfasst und es wird ein Bild erstellt. Auf der Basis dieses Bildes wird in der Bilderfassungseinrichtung ein Template erzeugt, beispielsweise mittels geeigneter Programmmittel. Dieses Template wird anschließend im System zur Zutritts- und/oder Zugangskontrolle weiter verarbeitet. Dazu wird das Template in einer Komparatoreinrichtung mit in einer Speichereinrichtung gespeicherten Informationsdaten, die ebenfalls in Form von Referenz-Handflächenmustern abgelegt sind, verglichen. Bei positiver Übereinstimmung kann dann beispielsweise der Zugang gewährt werden. Bei negativer Authentifizierung kann der Zugang verweigert werden. Bei erstmaliger Benutzung des Systems zur Zutritts- und/oder Zugangskontrolle kann vorgesehen sein, dass das erzeugte Template in der Speichereinrichtung abgelegt wird und somit für künftige Authentifizierungen zur Verfügung steht.

Die Erfindung wird nun anhand eines Ausführungsbeispiels unter Bezugnahme auf die beiliegenden Zeichnungen näher erläutert. Es zeigen
- Figur 1: in schematischer Ansicht den Aufbau einer erfindungsgemäßen Bilderfassungsvorrichtung; und
- Figur 2: eine vereinfachte Darstellung der Bilderfassungsvorrichtung gemäß Figur 1, wobei der Verlauf der Strahlung gezeigt ist.

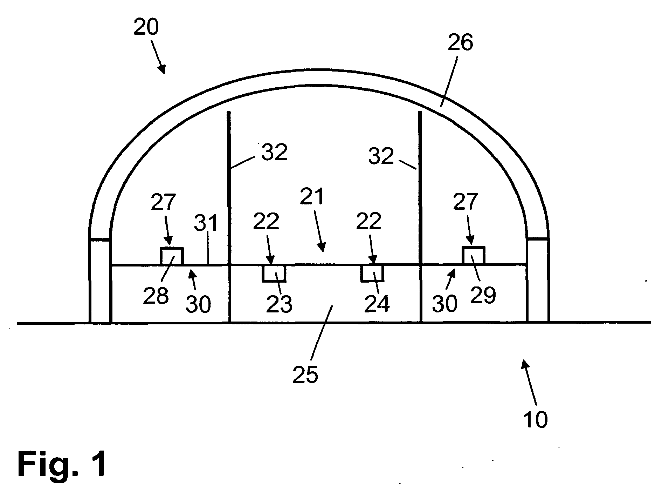

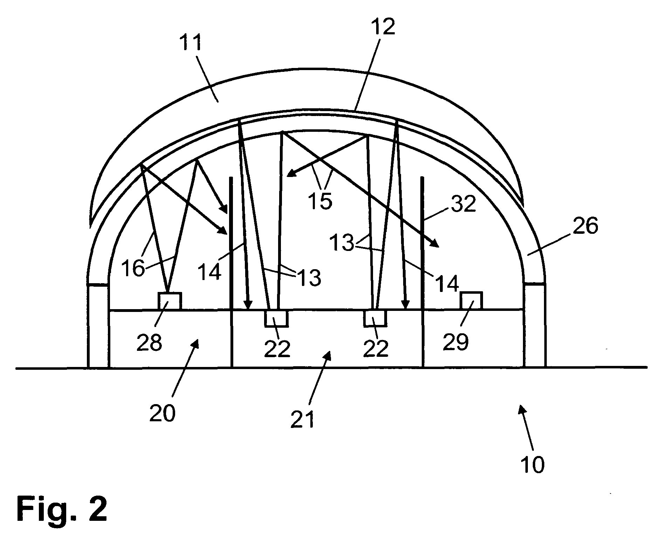

In den Figuren 1 und 2 ist eine Bilderzeugungsvorrichtung 20 dargestellt, die Bestandteil eines ansonsten nicht näher spezifizierten Systems zur Zutritts- und/oder Zugangskontrolle 10 ist.

In Figur 1 ist zunächst der konstruktive Aufbau der Bilderzeugungsvorrichtung 20 dargestellt.

Die Bilderzeugungsvorrichtung 20 weist eine Führungsvorrichtung 26 auf, die erfindungsgemäß die Kontur einer Kuppel in Form einer Halbkugel aufweist, und die eine Sensoreinrichtung 21 überspannt. Die Sensoreinrichtung 21 ist im Bereich des Fußkreises 31 der kuppelförmigen Führungseinrichtung 26 angeordnet, und zwar in dessen Zentrum. Die Führungseinrichtung 26 besteht aus einem transparenten Material, beispielsweise aus Kunststoff oder Glas.

Die Sensoreinrichtung 21 weist zunächst eine Einrichtung 22 zum Emittieren von Strahlung auf. Diese Einrichtung 22 besteht aus einer Anzahl von Kleinststrahlungsquellen 23, 24, die im gezeigten Beispiel als Infrarot-LEDs ausgebildet sind. Weiterhin verfügt die Sensoreinrichtung 21 über eine Einrichtung 25 zum Erfassen reflektierter Strahlung, die im gezeigten Beispiel als Kamera ausgebildet ist.

Im Peripheriebereich 30 der Sensoreinrichtung 21 ist weiterhin eine Einrichtung 27 zur Statusanzeige vorgesehen. Diese besteht im dargestellten Beispiel aus einer Anzahl von Kleinstlichtquellen 28, 29 in Form von LEDs, wobei es sich im Beispiel um so genannte RGB-LEDs handeln soll, die in einem einzigen Bauteil vereint Licht in drei unterschiedlichen Farben emittieren können, nämlich Rot (R). Grün (G) und Blau (B). Diese Kleinstlichtquellen 28, 29 sind kreisförmig und konzentrisch um die Sensoreinrichtung 21 herum angeordnet. Dabei befinden sich die Kleinstlichtquellen 28, 29 ebenfalls in der Ebene des Fußkreises 31, und zwar räumlich angeordnet zwischen der Sensoreinrichtung 21 und der Führungseinrichtung 26. Damit das die Kleinstlichtquellen 28, 29 emittierende Licht, beispielsweise auch solches, das an der Führungseinrichtung 26 zurückreflektiert wird, die Sensoreinrichtung 21, insbesondere deren Einrichtung 25 zum Erfassen reflektierter Strahlung, nicht stört, ist eine Sichtschutzeinrichtung 32 vorgesehen. Im vorliegenden Beispiel handelt es sich dabei um eine Sichtschutzwand, die zwischen der Sensoreinrichtung 21 und der Einrichtung 27 zur Statusanzeige, insbesondere deren Kleinstlichtquellen 28, 29, angeordnet beziehungsweise vorgesehen ist.

Nachfolgend wird nun die Funktionsweise der Bilderfassungsvorrichtung auch unter Bezugnahme auf die Figur 2 beschrieben.

Eine Person, die sich einer Handflächenauthentifizierung zum Zwecke einer Zugangskontrolle unterziehen möchte, legt ihre Hand 11 von außen auf die kuppelförmige Führungseinrichtung 26 auf. Damit der Person signalisiert wird, dass die Bilderfassungsvorrichtung betriebsbereit ist, könnten die Kleinstlichtquellen 28, 29 zu Beginn blau leuchten.

Die Einrichtung 22 zum Emittieren von Strahlung der Bilderzeugungsvorrichtung 20 sendet eine Strahlung, beispielsweise in Form von Infrarotstrahlung, gegen die Handfläche 12 der zu authentifizierenden Hand 11. Die emittierte Lichtstrahlung ist in Figur 2 durch die Pfeile mit der Bezugsziffer 13 gekennzeichnet. Das die Hand 11 durchströmende Blut absorbiert die Strahlung. Von der Hand 11 zur Sensoreinrichtung 21, das heißt zu deren Einrichtung 25 zum Erfassen reflektierter Strahlung, zurückreflektierte Strahlung wird von der Einrichtung 25 zum Erfassen der Strahlung, beispielsweise einer Kamera, erfasst. Dies ist in Figur 2 durch die Pfeile mit der Bezugsziffer 14 dargestellt. Auf diese Weise wird ein Bild erstellt.

Solche Strahlung der Sensoreinrichtung 21, die an der kuppelförmigen Führungseinrichtung 26 direkt zurückreflektiert wird, und die in Figur 2 durch die Pfeile mit der Bezugsziffer 15 dargestellt ist, wird durch die besondere Ausgestaltung der Führungseinrichtung 26 nunmehr nicht mehr direkt auf die Sensoreinrichtung 21 zurückreflektiert, sondern seitlich abgelenkt.

Auf der Basis des erstellten Bildes wird in einer Bilderfassungseinrichtung (nicht explizit dargestellt) ein Template erstellt, beispielsweise mittels geeigneter Programmmittel. Dieses Template wird anschließend im System zur Zutritts- und/oder Zugangskontrolle 10 weiter verarbeitet.

Dazu wird das Template in einer Komparatoreinrichtung mit in einer Speichereinrichtung gespeicherten Informationsdaten, die ebenfalls in Form von Referenz-Handflächenmustern abgelegt sind, verglichen. Bei positiver Übereinstimmung kann dann der Zugang gewährt werden. Dies könnte beispielsweise signalisiert werden, indem die Kleinstlichtquellen 28, 29 grün leuchten. Bei negativer Authentifizierung kann der Zugang verweigert werden. Dies könnte beispielsweise signalisiert werden, indem die Kleinstlichtquellen 28, 29 rot leuchten.

Damit die von den Kleinstlichtquellen emittierte Strahlung, die in Figur 2 durch Pfeile mit der Bezugsziffer 16 dargestellt ist, die Sensoreinrichtung 21, insbesondere deren Kamera (die Einrichtung 25 zum Erfassen reflektierter Strahlung) nicht stört, ist die Sichtschutzeinrichtung 32 vorgesehen, die die reflektierten Strahlen, oder solche Strahlen, die von den Kleinstlichtquellen direkt in Richtung der Kamera 25 emittiert werden, abfängt und abhält. Die in den Figuren dargestellte Sichtschutzeinrichtung 32 ist hier in erster Linie zur exemplarischen Verdeutlichung deren Funktionsweise dargestellt, so dass deren konstruktive Ausgestaltung, insbesondere deren Höhe, je nach Bedarf und Anwendungsfall natürlich unterschiedlich ausfallen kann.

Bei erstmaliger Benutzung des Systems zur Zutritts- und/oder Zugangskontrolle 10 kann vorgesehen sein, dass das erzeugte Template in der Speichereinrichtung abgelegt wird und somit für künftige Authentifizierungsprozeduren als Referenzwert ebenfalls zur Verfügung steht.

### Bezugszeichenliste

- 10: System zur Zutritts- und/oder Zugangskontrolle
- 11: Hand
- 12: Handfläche
- 13: Emittierter Strahl
- 14: In Sensoreinrichtung reflektierter Strahl
- 15: Nicht in Sensoreinrichtung reflektierter Strahl
- 16: Strahlung der Kleinstlichtquellen 28, 29

- 20: Bilderfassungsvorrichtung
- 21: Sensoreinrichtung
- 22: Einrichtung zum Emittieren von Strahlung
- 23: Kleinststrahlungsquelle (Infrarot-LED)
- 24: Kleinststrahlungsquelle (Infrarot-LED)
- 25: Einrichtung zum Erfassen reflektierter Strahlung (Kamera)
- 26: Führungseinrichtung
- 27: Einrichtung zur Statusanzeige
- 28: Kleinstlichtquelle (LED)
- 29: Kleinstlichtquelle (LED)
- 30: Peripheriebereich der Sensoreinrichtung
- 31: Fußkreis der Führungseinrichtung
- 32: Sichtschutzeinrichtung

## Patentansprüche

1. System (10) zur Zutritts- und/oder Zugangskontrolle mittels Handflächenvenenauthentifizierung, mit einer Speichereinrichtung, in der Informationsdaten in Form von Referenz-Handflächenvenenmustern abgelegt sind, mit einer Bilderfassungsvorrichtung (20) zum Erfassen eines Musters einer Handfläche (12) zum Zwecke der Handflächenvenenauthentifizierung, mit einer Sensoreinrichtung (21), aufweisend eine Einrichtung (22) zum Emittieren von Strahlung in Form von Infrarotlicht in Richtung der Handfläche (12) sowie eine Einrichtung (25) zum Erfassen von reflektierter Strahlung von einer Handfläche (12), und mit einer Führungseinrichtung (26) zum Positionieren der Handfläche (12) in Bezug auf die Sensoreinrichtung (21), bei dem die Führungseinrichtung (26) als Kuppel in Form einer Halbkugel ausgebildet ist, sodass Strahlung der Einrichtung (22) zum Emittieren von Strahlung in Form von Infrarotlicht, die an der Führungseinrichtung (26) direkt zurück reflektiert wird, so seitlich abgelenkt wird, dass die Einrichtung (25) zum Erfassen von an einer Handfläche reflektierter Strahlung nicht gestört wird, bei dem die Führungseinrichtung (26) einen kreisförmigen Raum überspannt, der einen ebenfalls kreisförmigen Fußbereich aufweist, bei dem die Sensoreinrichtung (21) innerhalb des kreisförmigen Fußbereichs, bevorzugt in dessen Zentrum, angeordnet ist, bei dem die Einrichtung (22) zum Emittieren von Strahlung eine oder mehrere Kleinststrahlungsquellen (23, 24) aufweist, die in der Ebene des kreisförmigen Fußbereichs angeordnet sind, bei dem die Einrichtung (25) zum Erfassen reflektierter Strahlung als Kamera ausgebildet ist, bei dem die Sensoreinrichtung (21) eine Einrichtung zur Bilderfassung eines Musters der Handfläche (12) auf der Basis der von der Handfläche (12) reflektierten Strahlung aufweist, bei dem die Bilderfassungsvorrichtung (20) eine Einrichtung (27) zur Statusanzeige der Authentifizierung aufweist, bei dem die Einrichtung (27) zur Statusanzeige mehrere Kleinstlichtquellen (28, 29) aufweist und die Kleinstlichtquellen (28, 29) im Peripheriebereich der Sensoreinrichtung (21) räumlich auf dem Fußkreis zwischen Sensoreinrichtung (21) und Führungseinrichtung (26) konzentrisch um die Sensoreinrichtung (21) herum angeordnet sind, bei dem die Führungseinrichtung (26) die Sensoreinrichtung (21) überspannt und bei dem die Führungseinrichtung (26) aus einem für die emittierte Strahlung durchlässigen Material ausgebildet ist, und mit einer Komparatoreinrichtung zum Vergleichen eines von der Bilderfassungsvorrichtung (20) erzeugten Handflächenvenenmusters mit den Referenz-Handflächenvenenmustern.

2. System zur Zutritts- und/oder Zugangskontrolle nach Anspruch 1, **dadurch gekennzeichnet, dass** wenigstens eine Kleinststrahlungsquelle (23, 24) als Kleinstlichtquelle, insbesondere als Infrarot-LED, ausgebildet ist.

3. System zur Zutritts- und/oder Zugangskontrolle nach Anspruch 1, **dadurch gekennzeichnet, dass** die Führungseinrichtung (26) aus transparentem Kunststoff oder Glas ausgebildet ist.

4. System zur Zutritts- und/oder Zugangskontrolle nach Anspruch 1, **dadurch gekennzeichnet, dass** die Einrichtung (27) zur Statusanzeige eine oder mehrere LED aufweist.

5. System zur Zutritts- und/oder Zugangskontrolle nach Anspruch 1, **dadurch gekennzeichnet, dass** zwischen der Einrichtung (27) zur Statusanzeige und der Sensoreinrichtung (21) eine Sichtschutzeinrichtung (32) vorgesehen ist, die verhindert, dass von der Einrichtung (27) zur Statusanzeige emittiertes Licht die Sensoreinrichtung (21) stört.

## Claims

1. A system (10) for entry and/or access control by means of a palm vein authentication, comprising a storage device, in which informational data in the form of reference palm vein patterns are stored, further comprising an image capturing apparatus (20) for detecting a pattern of a palm (12) for the purpose of a palm vein authentication, having a sensor device (21) comprising a device (22) for emitting radiation in the form of infrared light in the direction of the palm (12) and comprising a device (25) for detecting radiation which is reflected from a palm (12), and further comprising a guide device (26) for positioning the palm (12) in relation to the sensor device (21), wherein the guide device (26) is formed as a dome in the shape of a hemisphere, such that radiation of the device (22) for emitting radiation in the form of infrared light, which is directly reflected back at the guide device (26), is deflected laterally in such a way that the device (25) for detecting radiation which is reflected form a palm is not disturbed, wherein the guide device (26) spans a circular area, which comprises as well a circular foot region, wherein the sensor device (21) is arranged within the circular foot region, particularly in the centre thereof, wherein the device (22) for emitting radiation comprises one or more miniature radiation sources (23, 24), which are arranged in the level of the circular foot region, wherein the device (25) for detecting reflected radiation is formed as a camera, wherein the sensor device (21) comprises a device for image capture of a pattern of the palm (12) on the basis of radiation being reflected from the palm (12), wherein the image capturing apparatus (20) comprises a device (27) for status display of the authentication, wherein the device (27) for status display comprises a number of miniature light sources (28, 29) and the miniature light sources (28, 29) being arranged in the peripheral area of the sensor device (21) spatially on the circular foot circle between the sensor device (21) and the guide device (26) concentrically around the sensor device (21), wherein the guide device (26) spans the sensor device (21) and wherein the guide device (26) is made of a material which is transparent to the emitted radiation, and further comprising a comparator device for comparing one of the image capturing apparatus (20) generated palm vein pattern with the reference palm vein patterns.

2. The system for entry and/or access control according to claim 1, **characterized in that** at least one miniature radiation source (23, 24) is formed as a miniature light source, in particular as an infrared-LED.

3. The system for entry and/or access control according to claim 1, **characterized in that** the guide device (26) is formed of a transparent plastic material or of glass.

4. The system for entry and/or access control according to claim 1, **characterized in that** the device (27) for status display comprises one or more LED.

5. The system for entry and/or access control according to claim 1, **characterized in that** a screen device (32) is provided between the device (27) for status display and the sensor device (21), said screen device preventing that light which is emitted from the device (27) for status display disturbs the sensor device (21).

## Revendications

1. Système (10) de contrôle d'entrée et/ou d'accès au moyen d'une authentification de veines de la paume de la main, avec un dispositif de stockage, dans lequel sont déposées des données d'informations sous forme de modèles de référence de veines de la paume de la main, avec un dispositif de détection d'images (20) destiné à la détection d'un modèle d'une paume de la main (12) aux fins de l'authentification des veines de la paume de la main, avec un dispositif de capteur (21), comprenant un dispositif (22) destiné à l'émission d'un rayonnement sous forme d'une lumière infrarouge en direction de la paume de la main (12) ainsi qu'un dispositif (25) destiné à la détection d'un rayonnement réfléchi par une paume de la main (12), et avec un dispositif de guidage (26) destiné au positionnement de la paume de la main (12) par rapport au dispositif de capteur (21), dans lequel le dispositif de guidage (26) est conçu en tant que coupelle sous forme d'une demisphère de sorte que le rayonnement du dispositif (22) destiné à l'émission d'un rayonnement, sous forme de lumière infrarouge, qui est réfléchi en retour directement sur le dispositif de guidage (26), soit dévié latéralement de sorte que le dispositif (25) destiné à la détection d'un rayonnement réfléchi par une paume de la main ne soit pas perturbé, dans lequel le dispositif de guidage (26) surtend un espace de forme circulaire qui comprend une embase également de forme circulaire, dans lequel le dispositif de capteur (21) est disposé à l'intérieur de l'embase de forme circulaire, de préférence en son centre, dans lequel le dispositif (22) destiné à l'émission d'un rayonnement comprend une ou plusieurs microsources de rayonnement (23, 24) qui sont disposées dans le plan de l'embase de forme circulaire, dans lequel le dispositif (25) destiné à la détection d'un rayonnement réfléchi est conçu en tant que caméra, dans lequel le dispositif de capteur (21) comprend un dispositif destiné à la détection d'images d'un modèle de la paume de la main (12) sur la base du rayonnement réfléchi par la paume de la main (12), dans lequel le dispositif de détection d'images (20) comprend un dispositif (27) destiné à l'affichage d'états de l'authentification, dans lequel le dispositif (27) destiné à l'affichage d'états de l'authentification comprend plusieurs microsources de lumière (28, 29) et les microsources de lumière (28, 29) sont disposées dans la zone périphérique du dispositif de capteur (21) dans l'espace du cercle de l'embase entre le dispositif de capteur (21) et le dispositif de guidage (26) de manière concentrique autour du dispositif de capteur (21), dans lequel le dispositif de guidage (26) surtend le dispositif de capteur (21) et dans lequel le dispositif de guidage (26) est formé d'un matériau laissant passer le rayonnement émis, et avec un dispositif comparateur pour la comparaison d'un modèle de veines de la paume de la main, généré par le dispositif de détection d'images (20), au modèle de référence de veines de la paume de la main.

2. Système (10) de contrôle d'entrée et/ou d'accès selon la revendication 1, **caractérisé en ce qu'**au moins une microsource de rayonnement (23, 24) est conçue en tant que microsource de lumière, en particulier en tant que DEL infrarouge.

3. Système (10) de contrôle d'entrée et/ou d'accès selon la revendication 1, **caractérisé en ce que** le dispositif de guidage (26) est formé de verre ou d'un matériau synthétique transparent.

4. Système (10) de contrôle d'entrée et/ou d'accès selon la revendication 1, **caractérisé en ce que** le dispositif (27) destiné à l'affichage d'états comprend une ou plusieurs DEL.

5. Système (10) de contrôle d'entrée et/ou d'accès selon la revendication 1, **caractérisé en ce qu'**entre le dispositif (27) destiné à l'affichage d'états et le dispositif de capteur (21) est prévu un dispositif de protection visuelle (32) qui empêche que le dispositif de capteur (21) perturbe la lumière émise par le dispositif (27) destiné à l'affichage d'états.
